# EUROPÄISCHE PATENTSCHRIFT

(11) **EP 0 371 556 B1**
(45) Veröffentlichungstag und Bekanntmachung des Hinweises auf die Patenterteilung: **15.03.1995**
(21) Anmeldenummer: 89202985.1
(22) Anmeldetag: 24.11.1989
(51) Int. Cl.: H02M 3/158, H02M 1/12

(54) **Schaltungsanordnung zum Speisen einer Last**
Circuit arrangement for powering a load
Dispositif de circuit pour l'alimentation d'une charge

(30) Priorität: 30.11.1988 DE 3840305
(43) Veröffentlichungstag der Anmeldung: 06.06.1990
(73) Patentinhaber: Philips Patentverwaltung GmbH, 22335 Hamburg (DE); Philips Electronics N.V., 5621 BA Eindhoven (NL)
(72) Erfinder: Raets, Hubert, NL-6391 Nieuwenhagen (NL)
(74) Vertreter: Rooda, Hans

(56) Entgegenhaltungen:
- DE-A- 2 435 392
- IEEE JOURNAL OF SOLID-STATE CIRCUITS. vol. sc-17, no. 4, August 1982, NEW YORKUS Seiten 778 - 781; S. Singer: "Inductance-Less Up dc-dc Converter"
- PATENT ABSTRACTS OF JAPAN vol. 7, no. 182 (E-192)(1327) 11 August 1983,& JP-A-58 86868 (NIPPON) 24 Mai 1983,

## Beschreibung

Die Erfindung bezieht sich auf eine Schaltungsanordnung zum Speisen einer Last mit Energie aus einem Energieversorgungsnetz gemäß dem Oberbegriff des Hauptanspruchs.

In der nicht vorveröffentlichten deutschen Patentanmeldung P 37 22 337.2 ist eine Schaltungsanordnung zum Übertragen elektrischer Energie aus einer Wechselspannungsquelle beschrieben, die in bestimmten Zeitintervallen zum Einspeisen der Energie in einen Energiespeicher mit diesem verbunden ist, mit einem durch eine Ansteuerschaltung periodisch betätigten Schalter zum Entnehmen der Energie aus einem Energiespeicher. Bei dieser Schaltungsanordnung werden darin hervorgerufene, hochfrequente Störungen dadurch unterdrückt, d.h. von der Wechselspannungsquelle ferngehalten, daß die Ansteuerschaltung den Schalter nur außerhalb der Zeitintervalle leitend schaltet, in denen die Wechselspannungsquelle mit dem Energiespeicher verbunden ist. Diese Anordnung kommt insbesondere bei Schaltnetzteilen zum Einsatz, die Energie aus einer Netzwechselspannung entnehmen und durch die Schaltvorgänge des periodisch betätigten Schalters Störspannungen und -ströme erzeugen, die jedoch nicht in die Netzwechselspannung eingestreut werden sollen. Die Verbindung bzw. Trennung von Wechselspannungsquelle und Energiespeicher erfolgt dabei vorzugsweise durch eine Gleichrichterstufe. In den Zeitintervallen, in denen die Gleichrichterstufe zum Nachladen des Energiespeichers sich im leitenden Zustand befindet, wird dann die Betätigung des Schalters unterbrochen, so daß von diesem keine Störungen über die leitende Gleichrichterstufe in die Wechselspannungsquelle, d.h. auf die Netzwechselspannung, eingestreut werden.

Durch die Unterbrechung der Betätigung des Schalters wird jedoch auch die Energiezufuhr zu einem von dem Schaltnetzteil gespeisten Verbraucher unterbrochen, so daß dieser periodisch ungleichmäßig mit Energie versorgt wird.

Eine Schaltungsanordnung zum Speisen einer Last mit Energie aus einem Energieversorgungsnetz ist weiterhin aus de DE-OS 24 35 392 bekannt, vgl. insbesondere die Fig. 1 bis 4 mit zugehöriger Beschreibung. Die dort beschriebene Schaltungsanordnung, die einen netzgetrennten Betrieb von elektrischen Geräten, insbesondere Rundfunk- und Fernsehgeräten, ermöglichen soll, zeig selbst in der als vereinfachte Form bezeichneten Ausführung noch einen insbesondere für elektrische Kleingeräte unverhältnismäßig hohen Konstruktionsaufwand.

Die Erfindung hat die Aufgabe, eine derartige Schaltungsanordnung so weiterzubilden, daß mit einfachen Mitteln sowohl eine gleichmäßige Energieversorgung der Last gewährleistet ist als auch eine zuverlässige Unterdrückung der Übertragung von Störungen sowohl von der Last in das Energieversorgungsnetz als auch in umgekehrter Richtung.

Diese Aufgabe wird durch die kennzeichnenden Merkmale des Hauptanspruchs gelöst. Die beiden Unteransprüche stellen vorteilhafte Weiterbildungen des Erfindungsgegenstandes dar.

Beim Stand der Technik wird eine Schaltungsanordnung vorgestellt, die stets eine allpolige Trennung zwischen der Last und dem Netz gewährleistet, was für eine wirksame Netztrennung, die den einschlägigen Sicherheitsbestimmungen genügen soll, gedacht ist.

Bei der erfindungsgemäßen Schaltungsanordnung steht jedoch nicht der Sicherheitsaspekt im Vordergrund, sondern vielmehr eine gleichmäßige Energieversorgung bei gleichzeitiger, wirksamer und möglichst einfach aufgebauter Unterdrückung einer Übertragung von Störungen zwischen dem Netz und der Last. Dabei ist als Anwendungsgebiet der erfindungsgemäßen Schaltungsanordnung insbesondere der Bereich der Konsumgeräte und dort insbesondere derjenige der Kleingeräte, z.B. Rasierer, gedacht. Bei derartigen Massenartikeln geringen Preisniveaus spielen auch geringfügige Vereinfachungen und Verbesserungen wirtschaftlich eine bedeutsame Rolle.

Die Erfindung ermöglicht es, mit einem einfachen Schaltungsaufbau die Übertragung von Störungen zu unterdrücken bei gleichmäßiger, ununterbrochener Energieversorgung der Last. Aufwendige Hochfrequenzfilter üblicher Bauarten werden dafür nicht benötigt. Mit der Anordnung können sowohl vom Energieversorgungsnetz als auch von der Last ausgehende Störungen unterdrückt werden. Sie ist für beliebige Energieversorgungsnetze und beliebige Ausgestaltungen der Last in einfacher Weise anpaß- und einsetzbar.

Für das geforderte abwechselnde Verbinden ist es vorteilhaft, daß wenigstens einer der Energiespeicher in einer Kettenschaltung zwischen einer ersten und einer zweiten Schaltereinheit angeordnet ist. Über die erste Schaltereinheit wird dem Energiespeicher bevorzugt Energie aus dem Energieversorgungsnetz zugeleitet, während sie über die zweite Schaltereinheit an die Last abgegeben wird.

Eine besonders gleichmäßige Energieversorgung der Last wird dadurch erhalten, daß wenigstens einer der Energiespeicher fest mit der Last verbunden ist. Er wird bevorzugt aus der bzw. den Kettenschaltung(en) mit Energie nachgeladen.

Zum Steuern wenigstens einer der Schaltereinheiten zum abwechselnden Verbinden wenigstens eines der Energiespeicher entweder mit dem Energieversorgungsnetz oder mit der Last ist eine Steuerschaltung vorgesehen. Diese ermöglicht einen Betrieb der Schaltungsanordnung an einem beliebigen Energieversorgungsnetz, beispielsweise mit Gleich- oder Wechselstrom unterschiedlicher Frequenzen und Wellenformen. Durch die Steuerschaltung kann außerdem der Energiefluß vom Energieversorgungsnetz zur Last nach unterschiedlichen Anforderungen, beispielweise für unterschiedliche Lastfälle, gesteuert werden.

Wenigstens eine der ersten Schaltereinheiten, über die wenigstens einer der Energiespeicher mit dem Energieversorgungsnetz verbindbar ist, ist zum Gleichrichten einer vom Energieversorgungsnetz gelieferten Wechselspannung eingerichtet. Die betreffenden ersten Schaltereinheiten können dazu als nicht gesteuerte oder insbesondere durch die Steuerschaltung gesteuerte Gleichrichter ausgebildet sein.

Die erste(n) Schaltereinheit(en) sind ausschließlich durch die Wechselspannung vom Energieversorgungsnetz steuerbar. Dadurch wird eine einfache Gleichrichtung dieser Wechselspannung und zusätzlich ein einfacher Ablauf des Energietransports über die Energiespeicher zur Last ermöglicht.

Wenigstens eine der zweiten Schaltereinheiten ist durch die Steuerschaltung nach der bzw. den ersten Schaltereinheit(en) steuerbar. Die dadurch vorgegebene Steuerungshierarchie ermöglicht in allen Betriebsfällen einen sicheren Funktionsablauf der Schaltungsanordnung, insbesondere bei schwankender Spannung im Energieversorgungsnetz.

Vorzugsweise sind wenigstens zwei Kettenschaltungen zwischen dem Energieversorgungsnetz und der Last in Parallelschaltung angeordnet. Dadurch kann stets einer der Energiespeicher mit der Last verbunden sein und diese mit Energie speisen, während wenigstens ein weiterer Energiespeicher mit dem Energieversorgungsnetz zur Aufnahme von Energie verbunden ist.

Allen beschriebenen Ausbildungen der Erfindung ist gemeinsam, daß stets wenigstens eine gesperrte Schaltereinheit zwischen dem Energieversorgungsnetz und der Last eingefügt ist, so daß keine Störungen über die Leitungsverbindungen übertragen werden können, die das Energieversorgungsnetz über die Schaltereinheiten und die Energiespeicher mit der Last verbinden.

Die erfindungsgemäße Steuerschaltung weist wenigstens eine zwischen einer der ersten Schaltereinheiten und dem zugeordneten Energiespeicher eingefügte Potentialverschiebungsstufe auf zum Erzeugen einer Steuerspannung, die über einen Steuerzweig der zugeordneten zweiten Schaltereinheit zuführbar ist. Eine derartige Anordnung erlaubt in einfacher Weise eine Steuerung der zugeordneten zweiten Schaltereinheit in Abhängigkeit von den Betriebsbedingungen an der zugehörigen ersten Schaltereinheit, ohne daß dafür eine getrennte Steuerlogik mit einer gesonderten Stromversorgung erforderlich wäre. Die Steuerschaltung nach der Erfindung läßt sich damit sehr kompakt und kostengünstig mit den übrigen Bestandteilen der Schaltungsanordnung zusammenfassen. Sie weist außerdem einen geringen eigenen Energieverbrauch auf.

Ausführungsbeispiele der Erfindung sind in der Zeichnung dargestellt und werden im nachfolgenden näher beschrieben. Es zeigen:
- Fig. 1: eine blockschematische Darstellung.
- Fig. 2: eine weitere blockschematische Darstellung.
- Fig. 3: eine etwas detailliertere Darstellung der Figur 1
- Fig. 4: Diagramme zum Betrieb der Anordnung nach Fig. 3,
- Fig. 5: ein detailliertes Ausführungsbeispiel und
- Fig. 6, 7: Diagramme zum Betrieb dieser Anordnung,
- Fig. 8: ein weiteres Ausführungsbeispiel.

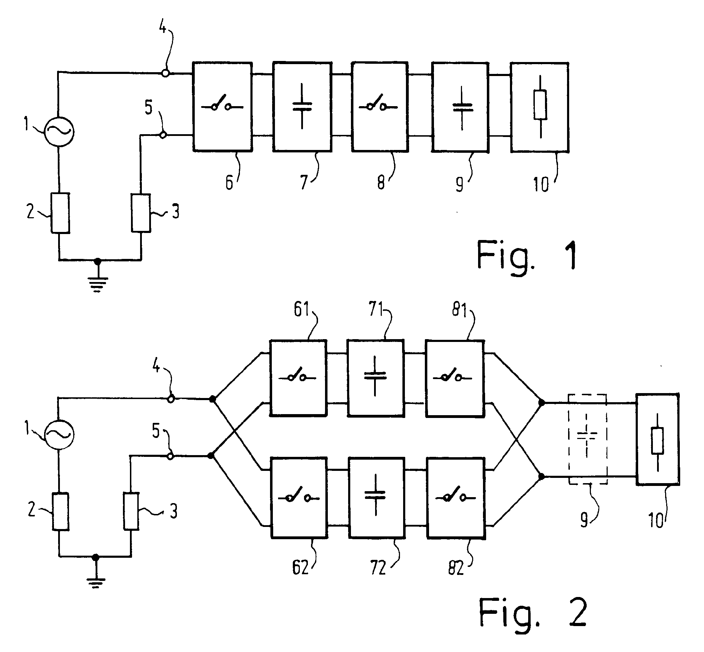

Die blockschematische Darstellung nach Fig. 1 umfaßt das Ersatzschaltbild eines Energieversorgungsnetzes aus einer (idealen) Spannungsquelle 1 und zwei Netzimpedanzen 2, 3, die zur Spannungsquelle 1 in Reihe liegen und den Innenwiderstand der Ersatzspannungsquelle des Energieversorgungsnetzes bilden. Ein Verbindungspunkt zwischen den Netzimpedanzen 2 und 3 ist geerdet. Die Netzspannung des Energieversorgungsnetzes steht dann an dessen Anschlußklemmen 4, 5 zur Verfügung.

Das Energieversorgungsnetz 1 bis 5 ist in Fig. 1 mit einer ersten Schaltereinheit 6 verbunden, an die sich in Kettenschaltung ein erster Energiespeicher 7, eine zweite Schaltereinheit 8, ein zweiter Energiespeicher 9 und als Abschluß die Last 10 anschließen. Im Betrieb werden die erste und die zweite Schaltereinheit 6 bzw. 8 abwechselnd in den leitenden und in den gesperrten Zustand derart überführt, daß stets nur die erste oder die zweite Schaltereinheit 6 oder 8 leitet, während die jeweils andere Schaltereinheit gesperrt ist. Der erste Energiespeicher 7 wird so abwechselnd entweder mit dem Energieversorgungsnetz 1 bis 5 oder mit dem zweiten Energiespeicher 9 und damit der Last 10 verbunden. Dadurch wird vom ersten Energiespeicher 7 abwechselnd Energie aus dem Energieversorgungsnetz aufgenommen und anschließend über den zweiten Energiespeicher 9 an die Last 10 weitergegeben. Der zweite Energiespeicher 9 dient dabei zum Zwischenspeichern von Energie, die während der Zeitabschnitte, in denen die zweite Schaltereinheit 8 sich im gesperrten Zustand befindet, der Last 10 zugeführt werden kann. Dadurch ist eine gleichmäßige Energieversorgung der Last 10 gewährleistet.

Durch die beschriebene Betriebsweise der Schaltereinheiten 6, 8 wird andererseits gewährleistet, daß zwischen dem Energieversorgungsnetz 1 bis 5 und der Last 10 stets eine Trennung, d.h. eine hochohmige Impedanz in Form mindestens einer gesperrten Schaltereinheit liegt. Dadurch können Störungen weder vom Energieversorgungsnetz 1 bis 5 auf die Last 10 noch von der Last 10 auf das Energieversorgungsnetz 1 bis 5 gelangen. Eine störungsempfindliche Last 10 kann so wirksam gegen Störspannungen abgeschirmt werden, die auf dem Energieversorgungsnetz 1 bis 5 anstehen; umgekehrt kann eine Störungen hervorrufende Last 10, beispielsweise ein Schaltnetzteil, vom Energieversorgungsnetz 1 bis 5 gespeist werden, ohne daß auf dieses Störungen aus der Last 10 übertragen werden.

In einem zweiten Ausführungsbeispiel, das in Fig. 2 dargestellt ist und in dem bereits beschriebene Bestandteile wieder mit identischen Bezugszeichen versehen sind, ist zwischen dem Energieversorgungsnetz 1 bis 5 und der Last 10 eine Parallelschaltung zweier Kettenschaltungen eingefügt, die je aus einer ersten Schaltereinheit 61 bzw. 62, einem ersten Energiespeicher 71 bzw. 72 sowie einer zweiten Schaltereinheit 81 bzw. 82 bestehen. Jede dieser Kettenschaltungen 61, 71, 81 bzw. 62, 72, 82 wird in der gleichen Weise betrieben wie die Kettenschaltung aus der ersten Schaltereinheit 6, dem ersten Energiespeicher 7 und der zweiten Schaltereinheit 8 nach Fig. 1. Zusätzlich wird die zeitliche Zuordnung der Schaltzustände der Schaltereinheiten 61, 62, 81 bzw. 82 in den beiden Kettenschaltungen zueinander derart vorgenommen, daß stets einer der ersten Energiespeicher 71 bzw. 72 mit dem Energieversorgungsnetz 1 bis 5 und gleichzeitig der andere mit der Last 10 verbunden ist, und umgekehrt. Während somit der eine der ersten Energiespeicher 71 bzw. 72 Energie aus dem Energieversorgungsnetz 1 bis 5 aufnimmt, gibt der andere der ersten Energiespeicher 71 bzw. 72 im gleichen Zeitraum Energie an die Last 10 ab. Am Ende dieses Zeitraums werden dann die Schaltereinheiten 61, 62, 81, 82 derart umgeschaltet, daß nun derjenige erste Energiespeicher 71 bzw. 72, der gerade Energie aufgenommen hat, zum Abgeben derselben mit der Last 10 verbunden wird, während der andere erste Energiespeicher 71 bzw. 72, der gerade Energie an die Last 10 abgegeben hat, jetzt mit dem Energieversorgungsnetz 1 bis 5 zum Aufnehmen weiterer Energie verbunden wird. Die ersten Energiespeicher 71 und 72 werden somit in einer Art Gegentaktbetrieb abwechselnd mit dem Energieversorgungsnetz 1 bis 5 und der Last 10 verbunden. Dadurch ist stets einer der beiden ersten Energiespeicher 71 bzw. 72 an die Last 10 geschaltet, die deswegen gleichmäßiger mit Energie versorgt wird als durch einen einzigen ersten Energiespeicher. Insbesondere kann mit dieser Anordnung ein doppelt so großer Energiefluß, d.h. eine doppelt so hohe Leistung vom Energieversorgungsnetz 1 bis 5 auf die Last 10 übertragen werden, wie dies bei einer Anordnung gemäß Fig. 1 möglich ist. Der Aufwand an Bauteilen, insbesondere bei den Energiespeichern, steigt dabei jedoch nicht im gleichen Maße wie der mögliche Energiefluß, so daß eine platzsparende Möglichkeit für gesteigerte Leistungen gegeben ist.

Entsprechend kann die dargestellte Parallelschaltung um weitere Parallelzweige mit weiteren, in gleicher Weise aufgebauten Kettenschaltungen erweitert werden.

Um eine Glättung der Schaltvorgänge beim Umschalten der Last 10 von einem der ersten Energiespeicher 71 bzw. 72 auf den anderen zu erreichen, kann - in Fig. 2 gestrichelt gezeichnet - zwischen den zweiten Schaltereinheiten 81 bzw. 82 und der Last 10 wiederum ein zweiter Energiespeicher 9 eingefügt sein. Da jedoch die von diesem zu überbrückenden Zeitintervalle wesentlich kürzer sind als bei der Anordnung nach Fig. 1, kann der zweite Energiespeicher 9 in Fig. 2 wesentlich kleiner dimensioniert werden, was ebenfalls zu einem einfachen, kompakten und preisgünstigen Aufbau beiträgt.

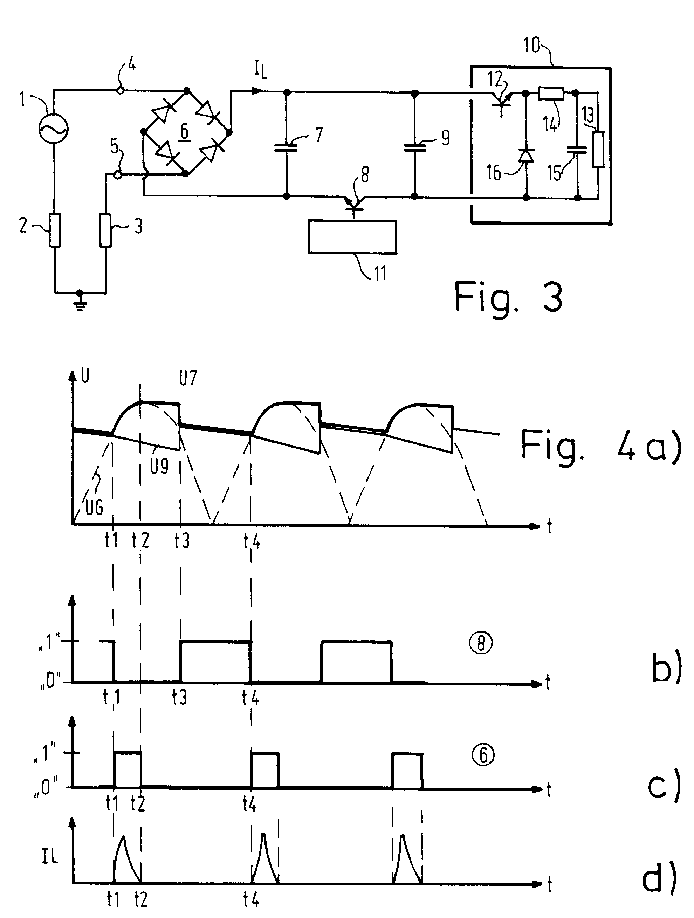

In Fig. 3 ist als drittes Ausführungsbeispiel eine detailliertere Schaltungsanordnung nach dem in Fig. 1 im Blockschaltbild wiedergegebenen Schaltschema dargestellt. Übereinstimmende Schaltungsteile sind dabei wieder mit identischen Bezugszeichen versehen.

Die erste Schaltereinheit 6 wird in Fig. 3 durch eine Gleichrichterbrücke (Graetz-Brücke) gebildet. Die erste Schaltereinheit 6 ist damit auch zum Gleichrichten der von der Spannungsquelle 1 des Energieversorgungsnetzes 1 bis 5 gelieferten Wechselspannung eingerichtet. Durch die an ihren Gleichspannungsanschlüssen auftretende pulsierende Gleichspannung wird der erste Energiespeicher 7 - im vorliegenden Fall ein Kondensator - mit Energie gespeist. Die zweite Schaltereinheit 8 wird durch einen Längstransistor in der Leitungsverbindung vom ersten Energiespeicher 7 zum zweiten Energiespeicher 9 - ebenfalls ein Kondensator - gebildet. Die zweite Schaltereinheit 8 wird von einer Steuerschaltung 11 gesteuert.

In Fig. 3 ist weiterhin der Aufbau der Last 10 als Schaltnetzteil angedeutet. Dieses umfaßt einen Schalttransistor 12, der periodisch eine Reihenschaltung aus einem Verbraucher 13 und einer Induktivität 14 an den zweiten Energiespeicher 9 schaltet. Parallel zum Verbraucher 13 ist ein Glättungskondensator 15 angeordnet, und parallel zur Reihenschaltung aus der Induktivität 14 und dem Verbraucher 13 liegt eine Freilaufdiode 16. Das als Last 10 fungierende Schaltnetzteil wird in üblicher Weise betrieben und daher hier nicht näher erläutert.

Durch die Schaltvorgänge des Schalttransistors 12 entstehen in der Last 10 Störimpulse, die bei leitender zweiter Schaltereinheit 8 über die Leitungsverbindungen auch auf die erste Schaltereinheit 6 gelangen und für den Fall, daß diese sich ebenfalls im leitenden Zustand befinden würde, über die Anschlußklemmen 4 und 5 in das Energieversorgungsnetz einstreuen. Daher wird die zweite Schaltereinheit 8 durch die Steuerschaltung 11 derart gesteuert, daß sie nur in den Zeitintervallen leitend ist, in denen die erste Schaltereinheit 6 sperrt.

Fig. 4 zeigt anhand einiger Diagramme den zeitlichen Verlauf der Vorgänge in der Schaltungsanordnung nach Fig. 3. Dabei ist im Diagramm nach Fig. 4a) die Spannung U an verschiedenen Punkten der Anordnung nach Fig. 3 über der Zeit t aufgetragen. Mit UG sind die positiv ausgerichteten Halbwellen der gleichgerichteten Wechselspannung des Energieversorgungsnetzes 1 bis 5 bezeichnet. Durch jede dieser positiven Halbwellen wird der erste Energiespeicher 7 im Zeitintervall zwischen den Zeitpunkten t1 und t2 nachgeladen. Dabei folgt die Spannung U7 am ersten Energiespeicher 7 dem Verlauf UG. Die erste Schaltereinheit 6, d.h. der Brückengleichrichter, ist im Zeitintervall zwischen t1 und t2 leitend. Dies ist im Diagramm nach Fig. 4c) schematisch dargestellt, wobei mit "0" der sperrende und mit "1" der leitende Zustand der ersten Schaltereinheit 6 bezeichnet ist. Der aus dem Energieversorgungsnetz 1 bis 5 in den ersten Energiespeicher 7 fließende Nachladestrom IL ist im Diagramm nach Fig. 4d) skizziert.

Wenn nach dem Zeitpunkt t2 die Spannung UG wieder sinkt, wird die erste Schaltereinheit 6 in den sperrenden Zustand überführt, und die Spannung U7 am ersten Energiespeicher 7 bleibt zunächst konstant, da sich auch die zweite Schaltereinheit 8 noch im sperrenden Zustand befindet. Dies ist in Fig. 4b) in zu Fig. 4c) entsprechender Weise dargestellt. Durch die Steuerschaltung 11 wird die zweite Schaltereinheit 8 bis zu einem Zeitpunkt t3 im gesperrten Zustand gehalten. Der erste Energiespeicher 7 ist dann sowohl vom Energieversorgungsnetz 1 bis 5 als auch vom zweiten Energiespeicher 9 und der Last 10 abgetrennt, so daß sich die Spannung U7 außer durch Leckströme nicht verändern kann.

Wie im Diagramm nach Fig. 4b) dargestellt, wird die zweite Schaltereinheit 8 durch die Steuerschaltung 11 zum Zeitpunkt t1 vom leitenden in den gesperrten Zustand überführt und dadurch der erste Energiespeicher 7 vom zweiten Energiespeicher 9 abgetrennt. Im Zeitintervall zwischen den Zeitpunkten t1 und t3 wird somit die Last 10 allein aus dem zweiten Energiespeicher 9 gespeist, wodurch die daran auftretende Spannung U9 vom Zeitpunkt t1 an stetig absinkt, vgl. Fig. 4a).

Zum Zeitpunkt t3, wenn die zweite Schaltereinheit 8 wieder in den leitenden Zustand überführt wird, ist der erste Energiespeicher 7 vollständig aufgeladen, während der zweite Energiespeicher 9 seinen tiefsten Entladungszustand während des dargestellten Betriebes erreicht hat. Durch das Umschalten der zweiten Schaltereinheit 8 wird ein Ausgleichsvorgang zwischen dem ersten und dem zweiten Energiespeicher 7 und 9 eingeleitet; aus dem ersten Energiespeicher 7 fließt Energie in den zweiten Energiespeicher 9, wobei die Spannung U7 am ersten Energiespeicher 7 absinkt und gleichzeitig die Spannung U9 am zweiten Energiespeicher 9 ansteigt. Nach Beendigung dieses Ausgleichsvorgangs sind beide Spannungen bis auf einen nicht dargestellten Spannungsverlust an der zweiten Schaltereinheit 8 identisch. Der Zeitpunkt t3 ist nun derart gewählt, daß die Spannung U7 beim Ausgleichsvorgang nicht niedriger wird als der Augenblickswert der gleichgerichteten Spannung UG, da anderenfalls die erste Schaltereinheit 6 zum Zeitpunkt t3 erneut leitend werden würde.

Im folgenden wird die Last 10 aus der Parallelschaltung des ersten und des zweiten Energiespeichers 7 und 9 gespeist, wobei die Spannungen U7 und U9 in gleichem Maße absinken, bis sie zum Zeitpunkt t4 gleich der ansteigenden Spannung der nächsten Halbwelle der gleichgerichteten Spannung UG des Energieversorgungsnetzes 1 bis 5 werden. Zu diesem Zeitpunkt t4 wird die erste Schaltereinheit 6 erneut leitend, und die zweite Schaltereinheit 8 wird durch die Steuerschaltung 11 in den sperrenden Zustand überführt. Dieser Wechsel ist in den Fig. 4b) und 4c) wiedergegeben. Während die Last 10 nun allein aus dem zweiten Enrgiespeicher 9 gespeist wird, fließt durch die erste Schaltereinheit 6 wiederum ein Nachladestrom IL, und die Vorgänge vom Zeitpunkt t1 an wiederholen sich.

Die Steuerschaltung 11 kann auf unterschiedliche Weise aufgebaut sein. In einem Ausführungsbeispiel wird durch einen über eine Diode aus dem Energieversorgungsnetz 1 bis 5 gespeisten Spannungsteiler eine der gleichgerichteten Spannung UG des Energieversorgungsnetzes 1 bis 5 proportionale Spannung abgeleitet und diese über einen Komparator mit einer Referenzspannung verglichen. Der Komparator liefert ein Signal, das einem bestimmten, festen Zeitpunkt jeder positiven Halbwelle der gleichgerichteten Spannung UG zugeordnet ist. Gegenüber diesem Zeitpunkt verschobene Zeitpunkte zum Steuern der zweiten Schaltereinheit 8 lassen sich mit entsprechend dimensionierten monostabilen Kippstufen erzeugen.

In einem anderen Ausführungsbeispiel ist in die Zuleitung zum ersten Energiespeicher 7 ein niederohmiger Meßwiderstand eingefügt, mit dem der Nachladestrom IL und insbesondere dessen steil ansteigende Flanke unmittelbar nach dem Zeitpunkt t1 erfaßt wird. Die zweite Schaltereinheit 8 kann dann wieder über monostabile Kippstufen geschaltet werden, die den Zeitpunkt t3 bestimmen.

In Abwandlung der beschriebenen Beispiele kann der Zeitpunkt t3 in der Steuerschaltung 11 auch durch einen Vergleich zwischen den gemessenen Spannungen U7 und U9 an den Energiespeichern 7, 9 und der in beschriebener Weise gemessenen gleichgerichteten Spannung UG bestimmt werden.

Der Zeitpunkt t3 ist dann erreicht, wenn die Summe U7+U9 größer wird als ein bestimmtes Vielfaches des Augenblickswerts der gleichgerichteten Spannung UG, welches vom Größenverhältnis der Energiespeicher 7 und 9 abhängt. Diese letzte Variante hat den Vorteil, daß die Schaltung selbsttätig Schwankungen der Spannung des Energieversorgungsnetzes 1 bis 5 und des in die Last 10 fließenden Stromes ausgleicht.

Ähnlich wie bei herkömmlichen Anordnungen weist auch bei der erfindungsgemäßen Schaltungsanordnung die Spannung U9 am zweiten Energiespeicher 9, mit der die Last 10 gespeist wird, eine im wesentlichen sägezahnförmige Welligkeit auf. Es zeigt sich jedoch, daß bei Vorgabe einer maximal zulässigen Welligkeit der erste und zweite Energiespeicher 7 und 9 zusammengenommen nicht größer ist als ein für gleiche Welligkeit bei herkömmlichen Schaltungsanordnungen benötigter Energiespeicher, so daß bezüglich dieser Bauteile, die einen relativ hohen Platzbedarf haben, der Aufwand bei der erfindungsgemäßen Schaltungsanordnung nicht erhöht ist.

Neben der in Fig. 3 dargestellten Ausführung der ersten Schaltereinheit 6 als Brückengleichrichter und der zweiten Schaltereinheit 8 als bipolarer Transistor sowie der Energiespeicher als Kondensatoren sind auch andere Ausführungen möglich. So können als erste Schaltereinheit anstelle eines nicht gesteuerten Schalters, der lediglich auf die Differenz der Spannungen an seinem Eingang und seinem Ausgang reagiert, auch gesteuerte Schalter eingesetzt werden, beispielsweise anstelle der Dioden in der Gleichrichterbrücke. Als gesteuerte Schalter sind bevorzugt Transistoren einzusetzen. Dadurch können die Schaltereinheiten auch mit anderen Schaltfrequenzen eingesetzt werden, als sie durch eine auf dem Energieversorgungsnetz übertragene Wechselspannung vorgegeben ist. Insbesondere können in jeder Halbwelle der gleichgerichteten Spannung UG mehrere Schaltzyklen der Schaltereinheiten durchgeführt werden.

Anstelle der als Kondensatoren ausgeführten Energiespeicher können wahlweise Akkumulatoren verwendet werden. In entsprechend ausgestalteten Ausführungsbeispielen lassen sich jedoch auch Induktivitäten als Energiespeicher einsetzen.

Weiterhin können die ersten Schaltereinheiten zur Anpassung der Spannung auf dem Energieversorgungsnetz an die zur Speisung der Last benötigte Spannung mit einem Netztrafo kombiniert sein, beispielsweise in Form eines geschalteten oder nicht geschalteten Einweg- oder Zweiweggleichrichters. Für die zweiten Schaltereinheiten können anstelle der einpoligen Ausführung nach Fig. 3 auch zweipolige Versionen eingesetzt werden.

Bei der Wahl der Schaltfrequenz für insbesondere die ersten Schaltereinheiten ist zu berücksichtigen, daß die damit durchgeführten Schaltvorgänge nicht ihrerseits zu Störsignalen führen.

Ein besonderer Vorteil der durch die erfindungsgemäßen Schaltungsanordnungen erzielten Störunterdrückung liegt außer im störungsfreien Betrieb in der Möglichkeit, insbesondere bei einer als Schaltnetzteil ausgebildeten Last 10 die Spannungsfestigkeit des darin benötigten Schalttransistors wesentlich geringer bemessen zu können, als dies ohne die erfindungsgemäße Störunterdrückung notwendig wäre. Bei Schaltnetzteilen, bei denen der Schalttransistor ohne Störunterdrückung der Spannung vom Energieversorgungsnetz ausgesetzt ist, wird die Spannungsfestigkeit unter Berücksichtigung eines oft beträchtlichen Sicherheitsaufschlages für Störungen, insbesondere sogenannte Netztransienten, festgelegt. Dieser Sicherheitsaufschlag kann die Größenordnung von einigen 100 Volt erreichen. Das bedeutet, daß an derartige Schalttransistoren stark erhöhte Forderungen gestellt werden müssen. Diese können jedoch bei Einsatz der erfindungsgemäßen Schaltungsanordnung entfallen, so daß einfachere und wesentlich preisgünstigere Bauelemente mit niedrigerer Sperrspannung Verwendung finden. Bei einer Integration der Bauteile eines solchen Schaltnetzteils auf einem Halbleiterkörper werden Vereinfachungen und Verbilligungen bezüglich der Wahl der Bauteilegeometrie und der Herstellungsverfahren erzielt.

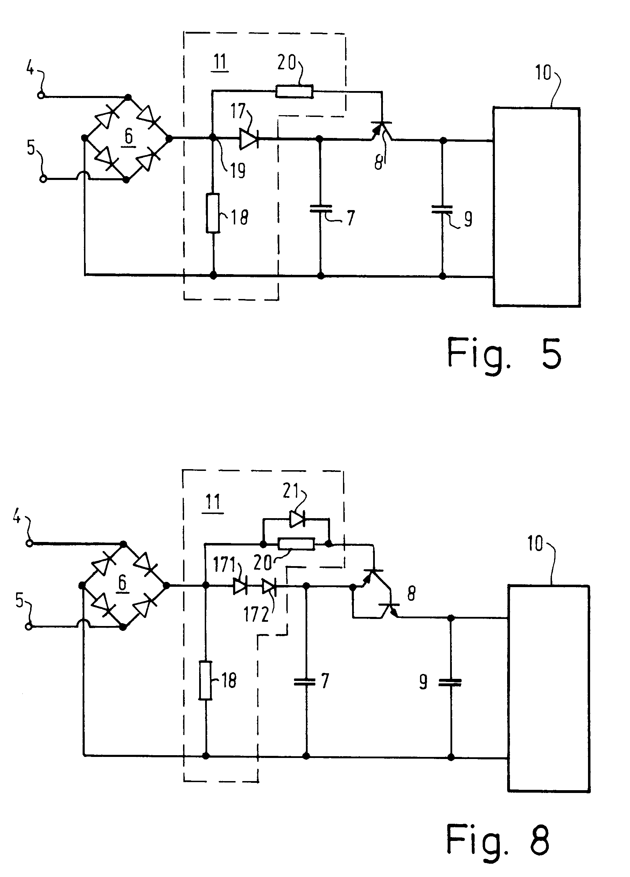

Fig. 5 zeigt ein weiteres Ausführungsbeispiel mit einer besonders einfachen und funktionssicheren Ausführung für eine Steuerschaltung 11. Darin sind bereits beschriebene Bauteile wieder mit denselben Bezugszeichen versehen. Die Anordnung entspricht in ihrem grundsätzlichen Aufbau dem Ausführungsbeispiel gemäß Fig. 3. Die Steuerschaltung 11 umfaßt dabei eine Potentialverschiebungsstufe aus einer Längsdiode 17 in der Leitungsverbindung zwischen der ersten Schaltereinheit 6 und dem ersten Energiespeicher 7 sowie einem Querwiderstand 18, der die Gleichspannungsanschlüsse der ersten Schaltereinheit 6 überbrückt. Am Verbindungspunkt 19 zwischen einem der Gleichspannungsanschlüsse der Schaltereinheit 6, der Längsdiode 17 und dem Querwiderstand 18 stellt die Potentialverschiebungsstufe 17, 18 eine Steuerspannung bereit, die über einen einen Steuerzweig bildenden Widerstand 20 dem Steueranschluß der zweiten Schaltereinheit 8 - im vorliegenden Fall ein bipolarer pnp-Transistor - zugeführt wird.

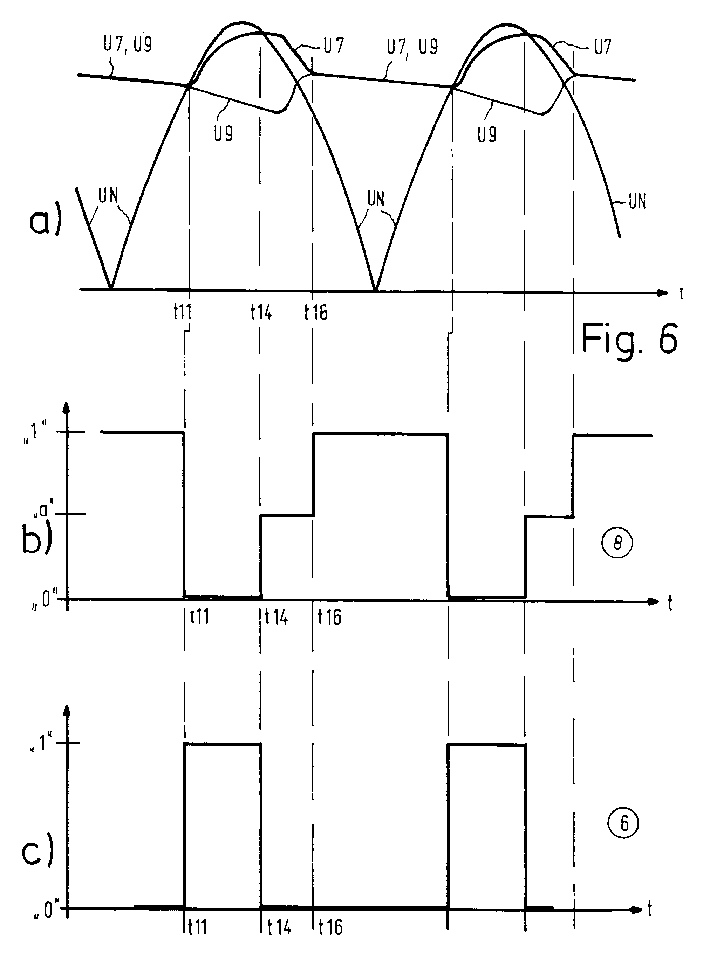

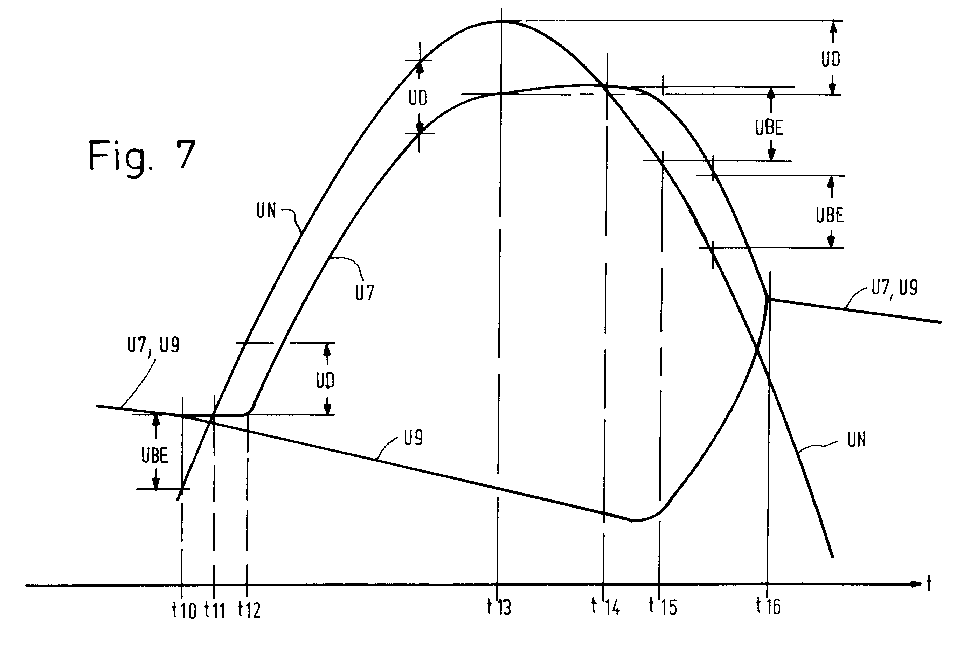

Die Funktionsweise der Schaltungsanordnung nach Fig. 5 ist in den Diagrammen nach Fig. 6 und 7 dargestellt. Fig. 6a) zeigt einige Spannungsverläufe in der Schaltungsanordnung nach Fig. 5 in einer im wesentlichen Fig. 4 entsprechenden Darstellung. Darin ist mit UN die pulsierende Gleichspannung bezeichnet, wie sie von der ersten Schaltereinheit 6 durch Gleichrichten der Wechselspannung des Energieversorgungsnetzes 1 bis 5 gebildet und an den Gleichspannungsanschlüssen der ersten Schaltereinheit 6 zur Verfügung gestellt wird. Der Spannungsverlauf UN berücksichtigt somit bereits Spannungsverschiebungen durch den Aufbau der ersten Schaltereinheit 6 mit nicht idealen Gleichrichterelementen. U7 ist die Spannung am ersten Energiespeicher 7, U9 diejenige am zweiten Energiespeicher 9. Fig. 7 zeigt eine detailliertere Darstellung der Spannungsverläufe im Bereich der Spitzen der Halbwellen der pulsierenden Gleichspannung UN, in dem die Umschaltvorgänge der ersten und zweiten Schaltereinheit 6 und 8 erfolgen. Mit t ist wiederum die Zeit - entlang der Abszisse aufgetragen - bezeichnet.

Im eingeschwungenen Zustand der Schaltungsanordnung ist im Zeitintervall vor dem Zeitpunkt t1O die pulsierende Gleichspannung UN kleiner als die Spannung U7 am ersten Energiespeicher 7. Die Längsdiode 17 ist daher gesperrt. Über den Widerstand 20 wird die am Verbindungspunkt 19 anliegende pulsierende Gleichspannung UN als Steuerspannung dem Steueranschluß der zweiten Schaltereinheit 8 zugeführt. Solange die Differenz zwischen der pulsierenden Gleichspannung UN und der Spannung U7 am ersten Energiespeicher 7 die Flußspannung der Basis-Emitter-Diode der zweiten Schaltereinheit 8 übersteigt, befindet sich letztere im leitenden Zustand, so daß erster und zweiter Energiespeicher 7 und 9 miteinander verbunden sind und an ihnen die gleiche Spannung anliegt. In diesem Zeitintervall stimmt daher der Verlauf der Spannung U9 am zweiten Energiespeicher 9 mit dem Verlauf der Spannung U7 überein.

Wird bei Überschreiten des Zeitpunkts t1O die genannte Differenz zwischen den Spannungen UN und U7 kleiner als die Flußspannung UBE der Basis-Emitter-Diode der zweiten Schaltereinheit 8, wird diese mit abnehmender Differenz mehr und mehr in den gesperrten Zustand überführt. Die Längsdiode 17 befindet sich weiterhin im gesperrten Zustand. Dadurch wird die Verbindung zwischen dem ersten und dem zweiten Energiespeicher 7 und 9 allmählich aufgetrennt, so daß die Last 10 mehr und mehr nur aus dem zweiten Energiespeicher 9 gespeist wird. Die Spannung U9 am zweiten Energiespeicher 9 beginnt daher, schneller als im Zeitintervall vor dem Zeitpunkt t1O zu sinken, während die Spannung U7 am ersten Energiespeicher 7 langsamer sinkt.

Zum Zeitpunkt t11 stimmt der Wert der pulsierenden Gleichspannung UN mit dem Wert der Spannung U7 am ersten Energiespeicher 7 überein. Damit verschwindet in diesem Zeitpunkt die über der Längsdiode 17 und damit auch die über der Basis-Emitter-Strecke der zweiten Schaltereinheit 8 liegende Spannung. Die Längsdiode 17 ist zum Zeitpunkt t11 noch vollständig gesperrt, während die zweite Schaltereinheit 8 gerade den völlig gesperrten Zustand erreicht hat.

Bei weiterem Anstieg der pulsierenden Gleichspannung UN wird die zweite Schaltereinheit 8 weiterhin im gesperrten Zustand belassen, während die Längsdiode 17 allmählich in den leitenden Zustand übergeht. Dieser ist erreicht, wenn zum Zeitpunkt t12 der Wert der pulsierenden Gleichspannung UN gerade um eine Diodenflußspannung UD der Längsdiode 17 größer ist als die Spannung U7 am ersten Energiespeicher 7. Der erste Energiespeicher 7 wird nun über die gleichzeitig mit der Längsdiode 17 in den leitenden Zustand wechselnde erste Schaltereinheit 6 mit der pulsierenden Gleichspannung UN aufgeladen; die Spannung U7 am ersten Energiespeicher 7 folgt daher im Abstand der Diodenflußspannung UD der pulsierenden Gleichspannung UN.

Andererseits wird die Last 10 weiterhin allein aus dem zweiten Energiespeicher 9 gespeist, so daß die Spannung U9 daran mit der zum Zeitpunkt t11 erreichten stärkeren Steigung weiterhin absinkt. Vom Zeitpunkt t12 an befindet sich die Längsdiode 17 im gesättigten Zustand.

Zum Zeitpunkt t13 erreicht die pulsierende Gleichspannung UN am Verbindungspunkt 19 ihren Scheitelwert und sinkt danach wieder ab. Dadurch verringert sich nach dem Zeitpunkt t13 die Differenz zwischen der pulsierenden Gleichspannung UN und der Spannung U7 am ersten Energiespeicher 7 wieder, so daß die Längsdiode 17 aus dem gesättigten Zustand zurück in den gesperrten Zustand überführt wird. So lange die Längsdiode 17 jedoch noch leitet, wird auch der erste Energiespeicher 7 noch geringfügig weiter aufgeladen, so daß die Spannung U7 noch weiter ansteigt, bis zum Zeitpunkt t14 die pulsierende Gleichspannung UN mit der Spannung U7 am ersten Energiespeicher 7 übereinstimmt und die Längsdiode 17 völlig sperrt. Damit ist der Aufladevorgang des ersten Energiespeichers 7 in dieser Halbwelle der pulsierenden Gleichspannung UN beendet, und auch die erste Schaltereinheit 6 geht in den gesperrten Zustand über.

Bis zum Zeitpunkt t14 sinkt außerdem die Spannung U9 am zweiten Energiespeicher 9 stetig weiter ab, da die zweite Schalteinheit 8 weiterhin gesperrt ist.

Dadurch, daß nach dem Zeitpunkt t14 die pulsierende Gleichspannung UN kleiner wird als die Spannung U7 am ersten Energiespeicher 7, bleibt die Längsdiode 17 im gesperrten Zustand, während die zweite Schaltereinheit 8 über den Widerstand 20 eine Steuerspannung erhält, durch die sie in den leitenden Zustand überführt wird. Dadurch wird die Verbindung zum Nachliefern der Energie vom ersten Energiespeicher 7 auf den zweiten Energiespeicher 9 hergestellt. Da der erste Energiespeicher 7 vollständig aufgeladen und der zweite Energiespeicher 9 im wesentlichen auf seine niedrigste Spannung entladen ist, beginnt die Energie vom ersten Energiespeicher 7 in den zweiten Energiespeicher 9 zu fließen, wodurch die Spannung U7 am ersten Energiespeicher 7 absinkt, während die Spannung U9 am zweiten Energiespeicher 9 anzusteigen beginnt. Zum Zeitpunkt t15 erreicht die Differenz zwischen der pulsierenden Gleichspannung UN und der Spannung U7 am ersten Energiespeicher 7 einen Wert, bei dem die zweite Schaltereinheit 8 vollständig in den leitenden, aktiven Zustand des sie bildenden bipolaren Transistors übergeganen ist. Von diesem Zeitpunkt an folgt der Verlauf der Spannung U7 demjenigen der pulsierenden Gleichspannung UN, die ja über den Verbindungspunkt 19 und den Widerstand 20 die zweite Schaltereinheit 8 steuert. Gleichzeitig mit der so erfolgenden kontrollierten Entladung des ersten Energiespeichers 7 erfolgt mit der von ihm abgegebenen Energie die Aufladung des zweiten Energiespeichers 9. Die Umladung der Energiespeicher 7 bzw. 9 wird durch die Steigung der abfallenden Flanke der pulsierenden Gleichspannung UN bestimmt. Würde die Umladung langsamer erfolgen, d.h. die Spannung U7 langsamer abfallen, geriete die zweite Schaltereinheit 8 in die Sättigung, was eine Beschleunigung der Umladung bewirken würde. Umgekehrt würde bei einer zu schnellen Entladung die Differenz zwischen der pulsierenden Gleichspannung UN und der Spannung U7 zu gering werden, wodurch unmittelbar die zweite Schaltereinheit 8 stärker in Richtung ihres gesperrten Zustandes hin überführt werden würde. Dadurch würde die Umladung verlangsamt werden.

Zum Zeitpunkt t16 haben sich die Spannungen U7 und U9 an den Energiespeichern 7 und 9 einander angeglichen; der Umladevorgang ist beendet. Bei weiterem Absinken der pulsierenden Gleichspannung UN folgt die Spannung U7 am ersten Energiespeicher 7 daher nicht mehr wie bisher im Abstand UBE der Flußspannung der Basis-Emitter-Strecke der zweiten Schaltereinheit 8. Vielmehr wird das im folgenden gemeinsame Absinken der Spannungen U7 und U9 allein durch den Energiefluß in die Last 10 bestimmt. Mit abnehmender pulsierender Gleichspannung UN wird dann die Differenz zur Spannung U7 größer, so daß die zweite Schaltereinheit 8 über den Widerstand 20 in den gesättigten und damit leitenden Zustand gesteuert wird. Dieser Zustand bleibt im folgenden unverändert, bis sich für die nächste Halbwelle der pulsierenden Gleichspannung UN die für den Zeitraum vom Zeitpunkt t10 an geschilderten Vorgänge entsprechend wiederholen.

Durch die beschriebenen Spannungsverläufe und -werte ist außerdem gewährleistet, daß die Längsdiode 17 vom Zeitpunkt t14 an durchgehend im gesperrten Zustand verbleibt und sich entsprechend die erste Schaltereinheit 6 im gesperrten Zustand befindet.

Die Diagramm nach Fig. 6b) und c) zeigen vereinfacht in zu Fig. 4b) und c) entsprechender Weise die Zustände der ersten und zweiten Schaltereinheit 6 bzw. 8 in Abhängigkeit von der Zeit t. Vor dem Zeitpunkt t11 befindet sich die erste Schaltereinheit 6 in dem mit "0" im Diagramm nach Fig. 6c) bezeichneten gesperrten Zustand, während sich die zweite Schaltereinheit 8, wie in Fig. 6b) dargestellt, in dem mit "1" bezeichneten leitenden - gesättigten - Zustand befindet. Zum Zeitpunkt t11 werden diese Zustände gewechselt; bis dahin ist die zweite Schaltereinheit 8 in den gesperrten Zustand übergegangen, entsprechend einem vereinfacht als senkrechte Flanke dargestellten Übergang zum Zustand "0" im Diagramm nach Fig. 6b). Die erste Schaltereinheit 6 nimmt nach dem Zeitpunkt t11 den leitenden Zustand an. Zum Zeitpunkt t14 wechselt die erste Schaltereinheit 6 zurück in den gesperrten Zustand, während die zweite Schaltereinheit 8 in den aktiven Zustand "a" des sie bildenden bipolaren Transistors überführt wird und in diesem bis zum Zeitpunkt t16 verbleibt. Der aktive Zustand "a" ist in Fig. 6b) als leitender Zwischenzustand dargestellt. Zum Zeitpunkt t16 nimmt die zweite Schaltereinheit 8 dann den leitenden, gesättigten Zustand "1" an, während sich die erste Schaltereinheit 6 weiterhin im gesperrten Zustand "0" befindet. Diese Vorgänge wiederholen sich entsprechend in der nächsten Halbwelle der pulsierenden Gleichspannung UN.

Aus dem vorstehenden ist weiterhin ersichtlich, daß bei der Anordnung nach Fig. 5 die Zeitintervalle, in denen die Schaltereinheiten 6 und 8 ihre leitenden bzw. gesperrten Zustände annehmen, stets voneinander getrennt sind, d.h. sich aufgrund der besonderen Erzeugung der Steuerspannung für die zweite Schaltereinheit 8 nicht überlappen können. Damit ist stets eine hochohmige Trennung zwischen dem Energieversorgungsnetz 1 bis 5 und der Last 10 sichergestellt.

Um auch über den Widerstand 20 eine möglichst geringe Übertragung von Störungen zu erhalten, wird dieser Widerstand möglichst hochohmig dimensioniert. Es wird daher für den die zweite Schaltereinheit 8 bildenden Transistor eine möglichst hohe Stromverstärkung angestrebt, damit bei vorgegebenem Strom für die Energieübertragung vom ersten Energiespeicher 7 in den zweiten Energiespeicher 9 der Steuerstrom über den Widerstand 20 möglichst gering gewählt werden kann.

Fig. 8 zeigt eine Abwandlung des Ausführungsbeispiels nach Fig. 5, bei der die zweite Schaltereinheit 8 in Form einer Kombination eines pnp-Transistors mit einem npn-Transistor ausgeführt ist, um die Stromverstärkung zu erhöhen. Um die Potentialverhältnisse beim Steuern dieser Ausführung der zweiten Schaltereinheit 8 zu erhalten, ist anstelle der Längsdiode 17 eine Reihenschaltung aus zwei Längsdioden 171, 172 eingefügt. Außerdem ist parallel zum Widerstand 20 im Steuerzweig eine Ausräumdiode 21 geschaltet, die ein schnelles Entladen der Basiszone des pnp-Transistors der zweiten Schaltereinheit 8 gewährleistet.

Die Schaltungsanordnungen nach Fig. 5 und 8 sind sehr einfach aufgebaut; insbesondere benötigen sie für die in ihnen enthaltenen Steuerschaltungen 11 keine separaten Logikschaltungen und keine dafür erforderlichen, gesonderten Energieversorgungen. Die mit diesen Schaltungsanordnungen erreichten Störunterdrückungen sind sehr gut, da insbesondere Schwankungen der Spannung auf dem Energieversorgungsnetz 1 bis 5 und Schwankungen der Energieaufnahme der Last 10 selbsttätig ausgeglichen werden. Die Wirkung der Störunterdrückung ist auch bei einer Veränderung des zeitlichen Verlaufs der Spannung auf dem Energieversorgungsnetz und damit der pulsierenden Gleichspannung UN gewährleistet. Durch die geringe Anzahl der benötigten Bauelemente ist die Schaltungsanordnung auch für größere zu übertragende Energieflüsse einfach und kostengünstig aufbaubar und insbesondere auch auf einem Halbleiterkörper integrierbar.

## Patentansprüche

1. Schaltungsanordnung zum Speisen einer Last (10) mit Energie aus einem Energieversorgungsnetz (1 bis 5), mit wenigstens zwei Energiespeichern (7, 9), von denen wenigstens einer in einer Kettenschaltung zwischen wenigstens einer ersten (6 bzw. 61, 62) und wenigstens einer zweiten Schaltereinheit (8 bzw. 81, 82) angeordnet und abwechselnd mit der Last (10) oder mit dem Energieversorgungsnetz (1 bis 5) verbindbar und wenigstens ein weiterer der Energiespeicher (9) fest mit der Last (10) verbunden ist, mit einer Steuerschaltung (11) zum Steuern wenigstens einer (8) der Schaltereinheiten zum abwechselnden Verbinden wenigstens eines (7) der Energiespeicher entweder mit dem Energieversorgungsnetz (1 bis 5) oder mit der Last (10), wobei wenigstens eine der ersten Schaltereinheiten (6 bzw. 61, 62), über die wenigstens einer der Energiespeicher (7 bzw. 71, 72) mit dem Energieversorgungsnetz (1 bis 5) verbindbar ist, zum Gleichrichten einer vom Energieversorgungsnetz (1 bis 5) gelieferten Wechselspannung eingerichtet und ausschließlich durch die Wechselspannung vom Energieversorgungsnetz (1 bis 5) steuerbar ist und wenigstens eine der zweiten Schaltereinheiten (8 bzw. 81, 82) durch die Steuerschaltung (11) nach der bzw. den ersten Schaltereinheit(en) (6 bzw. 61, 62) steuerbar ist,
**dadurch gekennzeichnet**, daß die Steuerschaltung (11) wenigstens eine zwischen einer der ersten Schaltereinheiten (6) und der Zuleitung zu dem zugeordneten Energiespeicher (7) eingeschaltete eine Diode enthaltende Potentialverschiebungsstufe (17, 18) aufweist zum Erzeugen einer Steuerspannung, die über einen Steuerzweig (20) der zugeordneten zweiten Schaltereinheit (8) zuführbar ist.

2. Schaltungsanordnung nach Anspruch 1,
**dadurch gekennzeichnet**, daß wenigstens zwei Kettenschaltungen (61, 71, 81 und 62, 72, 82) zwischen dem Energieversorgungsnetz (1 bis 5) und der Last (10) in Parallelschaltung angeordnet sind.

3. Schaltungsanordnung nach Anspruch 1 oder 2,
**dadurch gekennzeichnet**, daß die Potentialverschiebungsstufe eine Längsdiode (17) in der Leitungsverbindung zwischen der ersten Schaltereinheit (6) und dem ersten Energiespeicher (7) sowie einen Querwiderstand (18), der Gleichspannungsanschlüsse der ersten Schaltereinheit (6) überbrückt, umfaßt.

## Claims

1. A circuit arrangement for powering a load (10) from a power supply mains (1 to 5), comprising at least two energy storage devices (7,9) of which at least one is arranged in a series circuit between at least one first (6 or 61,62) and at least one second (8 or 81,82) switching unit and can be alternately connected to the load (10) or to the power supply mains (1 to 5) and of which at least a further one (9) is fixedly connected to the load, and comprising a control circuit (11) for controlling at least one (8) of the switching units for the alternate connection of at least one (7) of the energy storage devices either to the power supply mains (1 to 5) or to the load (10), while at least one of the first switching units (6 or 61,62), through which at least one of the energy storage devices (7 or 71,72) can be connected to the power supply mains (1 to 5), is constructed so as to rectify an AC voltage supplied by the power supply mains (1 to 5) and is controllable exclusively by means of the AC voltage from the power supply mains (1 to 5), at least one of the second switching units (8 or 81,82) being controllable by the control circuit (11) after the first switching unit(s) (6 or 61,62),
characterized in that the control circuit (11) comprises at least one potential shift stage (17,18) which comprises a diode and is arranged between one of the first switching units (6) and the lead to the associated energy storage device (7) for the generation of a control voltage which can be applied to the associated second switching unit (8) through a control branch (20).

2. A circuit arrangement as claimed in Claim 1, characterized in that at least two series circuits (61, 71, 81 and 62, 72, 82) are arranged in parallel between the power supply mains (1 to 5) and the load (10).

3. A circuit arrangement as claimed in Claim 1 or 2, characterized in that the potential shift stage comprises a series diode (17) in the connecting line between the first switching unit (6) and the first energy storage device (7), as well as a parallel resistor (18) which shunts DC connection terminals of the first switching unit (6).

## Revendications

1. Circuit conçu pour alimenter une charge (10) en énergie provenant d'un réseau d'alimentation en énergie (1 à 5) comportant au moins deux accumulateurs d'énergie (7, 9) dont au moins l'un desdits deux accumulateurs d'énergie est disposé dans un montage en chaîne intercalé entre au moins une première unité de commutation (6, respectivement 61, 62) et au moins une deuxième unité de commutation (8, respectivement 81, 82) qui peut être relié alternativement à la charge (10) ou au réseau d'alimentation en énergie (1 à 5) et dont au moins l'autre (9) desdits accumulateurs d'énergie est fixé sur la charge (10), un circuit de commande (11) pour commander au moins l'une (8) desdites unités de commutation afin de relier alternativement au moins l'un (7) desdits accumulateurs d'énergie soit avec le réseau d'alimentation en énergie (1 à 5) soit avec la charge (10), au moins l'une desdites premières unités de commutation (6, respectivement 61, 62) qui peut être connectée au réseau d'alimentation en énergie (1 à 5) par l'intermédiaire d'au moins l'un desdits accumulateurs d'énergie 97, respectivement 71, 72) étant conçue pour redresser une tension alternative fournie par le réseau d'alimentation en énergie (1 à 5) et étant uniquement commandable par la tension alternative fournie par le réseau d'alimentation en énergie (1 à 5) et au moins l'une desdites deuxièmes unités de commutation (8, respectivement 81, 82) étant commandable par le circuit de commande (11) disposé après la (les) première(s) unité(s) de commutation (6, respectivement 61, 62) caractérisé en ce que le circuit de commande (11) présente au moins un étage de déplacement de potentiel (17, 18) comportant une diode, mis en circuit, disposé entre l'une (6) desdites premières unités de commutation et la ligne d'amenée de l'accumulateur d'énergie (7) associé et conçu pour engendrer une tension de commande qui peut être alimentée par l'intermédiaire d'une branche de commande (20) de la deuxième unité de commutation associée (8).

2. Circuit selon la revendication 1, caractérisé en ce qu'au moins deux montages en chaîne (61, 71, 81 et 62, 72, 82) sont montés en parallèle entre le réseau d'alimentation en énergie (1 à 5) et la charge (10).

3. Circuit selon la revendication 1 ou 2, caractérisé en ce que l'étage de déplacement de potentiel (17) comporte une diode longitudinale (17) incorporée dans la ligne interconnectant la première unité de commutation (6) et le premier accumulateur d'énergie (7), ainsi qu'une résistance transversale (18) pontant les connexions de tension continue de la première unité de commutation (6).
